# EUROPEAN PATENT APPLICATION

(11) **EP 2 781 535 A1**
(43) Date of publication of application: **24.09.2014**
(21) Application number: 12850003.0
(22) Date of filing: 30.10.2012
(51) Int. Cl.: C08G 75/04, C09J 4/02, C09J 167/06, C09J 175/14

(54) **ACRYLIC RESIN COMPOSITION**

(30) Priority: 17.11.2011 JP 2011251853
(71) Applicant: Three Bond Fine Chemical Co., Ltd., Sagamihara-shi Kanagawa 252-0146 (JP)
(72) Inventor: NOGAMI, Yasutoshi, Hachioji-shi Tokyo 193-8533 (JP); WACHI, Takanori, Hachioji-shi Tokyo 193-8533 (JP)
(74) Representative: Copsey, Timothy Graham
(86) International application number: PCT/JP2012/078032
(87) International publication number: WO 2013/073364

(57) **Abstract**

[PROBLEM]

The present invention provides an acrylic resin composition, which has low viscosity and can be cured even by an LED irradiation device with low illuminance, and which provides a cured product with adequate peel strength without addition of an additive for forced peeling, wherein the cured product has both toughness and bendability.

[SOLUTION]

An acrylic resin composition, which contains components (A) to (D) as essential components, and contains 1000 to 2000 parts by mass of the component (B), 30 to 250 parts by mass of the component (C), and 10 to 100 parts by mass of the component (D), per 100 parts by mass of the component (A):
Component (A): an acrylic oligomer,
Component (B): an acrylic monomer, which contains components (b-1) to (b-3), wherein the components (b-1) to (b-3) each are contained in an amount of at least 20 mass% in the component (B),
Component (b-1) : an ether-based acrylic monomer and/or an ester-based acrylic monomer,
Component (b-2): a cyclic hydrocarbon-based acrylic monomer,
Component (b-3): an aromatic acrylic monomer,
Component (C): a thiol compound, and
Component (D): a photoinitiator.

## Description

### TECHNICAL FIELD

The present invention relates to an acrylic resin composition, which has good handleability because of low viscosity and has adequate peel strength, and is easily peeled from an adherend because a cured product has toughness.

### BACKGROUND ART

The reaction of a vinyl group such as an acryl group, a methacryl group or a vinyl ether group and a thiol group is a reaction which has been already applied in industry as the ene-thiol reaction. A composition containing an acryl group, in particular, can be cured by irradiation of an energy ray when a photoinitiator is added thereto. In recent years, plastic lenses have been formed by photo-curing using an acrylic compound and a polyfunctional thiol compound as described in Patent Literature 1. It is believed that when using a polyfunctional thiol compound, the crosslink density of a cured product becomes high. A cured product which is transparent and very hard is formed, and thus is suitable for lenses. Meanwhile, because of a forming material, its adhesive properties to an adherend are not particularly considered.

As described in Patent Literature 2, an acrylic compound is also used for a temporary fixing agent, and compositions by which a cured product is peeled from an adherend after use by the softening of the cured product by heating and the immersion thereof in hot water are also known. Because an additive for easy peeling is added, however, there is a strong possibility that, when an adherend is washed, washing water is contaminated by dissolution or dispersion of impurities in washing water. When washing water is extremely contaminated, a washing step needs to be carried out several times, thereby taking too much time.

In addition, the invention of Patent Literature 3 is known as a sheet using an acrylic compound and a thiol compound. When using a temporary fixing agent in the sheet state, however, it is difficult to manage a resin layer thickness and compression bonding is required for lamination, and thus steps are increased. There is, therefore, a drawback in that workability significantly deteriorates.

### PRIOR ART DOCUMENTS

### PATENT LITERATURE

Patent Literature 1: JP-A-2005-171168
Patent Literature 2: JP-A-2006-328094
Patent Literature 3: JP-A-2-296350

### SUMMARY OF INVENTION

### PROBLEM TO BE SOLVED BY THE INVENTION

In the case of a composition with low viscosity, an LED irradiation device using LED (Light Emitting Diode) as a light source has low illuminance, and thus the photo-curing of a curable resin composition has been difficult until now. Even when the composition can be cured, it has been difficult to accomplish that the cured product has adequate peel strength and both toughness and bendability are provided to the cured product.

### MEANS FOR SOLVING THE PROBLEM

As a result of intensive investigations to accomplish the above object, the present inventors found a technique for an acrylic resin composition, thereby completing the present invention.

1 The main points of the present invention will be now described. The first embodiment of the present invention is an acrylic resin composition, which contains components (A) to (D) as essential components, and contains 1000 to 2000 parts by mass of the component (B), 30 to 250 parts by mass of the component (C), and 10 to 100 parts by mass of the component (D), per 100 parts by mass of the component (A), wherein the component (A): an acrylic oligomer; the component (B): an acrylic monomer, which contains components (b-1) to (b-3), wherein the components (b-1) to (b-3) each are contained in an amount of at least 20 mass% in the component (B); the component (b-1): an ether-based acrylic monomer and/or an ester-based acrylic monomer; the component (b-2): a cyclic hydrocarbon-based acrylic monomer; the component (b-3): an aromatic acrylic monomer; the component (C) : a thiol compound; and the component (D): a photoinitiator.

The second embodiment of the present invention is the acrylic resin composition described in the first embodiment, wherein the component (A) is an acrylic oligomer having an ether skeleton and/or an ester skeleton.

The third embodiment of the present invention is the acrylic resin composition described in either of the first or the second embodiment for the use in an LED irradiation device.

The fourth embodiment of the present invention is a temporary fixing agent comprising the acrylic resin composition described in any one of the first to the third embodiments.

### MODE FOR CARRYING OUT THE INVENTION

The acrylic resin composition of the present invention is a photo-curable resin composition containing a photoinitiator and cured by photo-irradiation (preferably ultraviolet rays). Various irradiation devices for active energy rays are known, and among these, an LED irradiation device has attracted attention. In the LED irradiation device, the life of a light source is long and electrical power consumption is significantly low as compared to those of conventional UV lamps and the like. In the LED irradiation device, the amount of heat generated from the light source is also particularly small as compared to that of UV lamps, and thus cooling equipment can be miniaturized and the weight thereof can be reduced. Further, quality deterioration of a base material caused by heat emitted from the light source can be suppressed. As described above, the LED irradiation device has various advantages; however, LED light emission has a single peak, and the light emission wavelength region is small (the wavelength region range is approximately 10 nm to 50 nm). Therefore, the total amount of energy by the irradiation of ultraviolet ray for the same period is low as compared to that of a lamp light source emitting ultraviolet ray with a wide wavelength.

In the case where an acrylic resin composition is used as an adhesive, incidentally, for application thereof to an adherent, when its viscosity is low to some extent, operation efficiency is improved, and this is advantageous. When a monomer component with low viscosity increases to decrease the viscosity of the resin composition, however, by curing using an LED irradiation device with a low total amount of energy,surface curing becomesinsufficient,therefore,there has been a possibility that an adherend can be contaminated by uncured parts until now. In addition, in the case of the resin composition with low viscosity, when a cured product of the resin composition is peeled by pulling after temporary fixation of two adherends, the cured product can be cut. Further, curing by LED has a low energy amount and thus surface curing can be insufficient.

The acrylic resin composition of the present invention can be cured using an LED irradiation device, even though it has low viscosity, and surface curing properties after curing are high. Even when a cured product of the resin composition is peeled by pulling, the cured product is not cut and can be peeled. Further, when used as a temporary fixing agent, the acrylic resin composition of the present invention has adequate peel strength required for peeling a cured product from an adherend, and the cured product has adequate bendability.

The details of the present invention will be now described.

In the present invention, acrylic oligomers and/or acrylic monomers are used as main curing components. This is because, even when a composition is cured in a thin film state, the deterioration of photo-curing properties by the effect of oxygen inhibition is less than that when using methacrylic oligomers, methacrylic monomers and the like.

The component (A) which can be used in the present invention is an acrylic oligomer. The acrylic oligomer indicates a compound having one or more acryloyl groups in the molecule and indicates one with a viscosity at 25°C of 5000 mPa·s or more. It is noted that as viscosity in the present description, a value measured by a method described in Examples described below is adopted.

Specific examples of acrylic oligomers include epoxy modified acrylic oligomers obtained by adding acrylic acid to the epoxy group of bisphenol A epoxy resin, novolac epoxy resin and the like, epoxy acrylate oligomers such as epoxy modified acrylic oligomers having an alkylene oxide group; urethane acrylate oligomers; polyester acrylate oligomers; polyether acrylate oligomers and the like.

Epoxy acrylate oligomers can be produced by reaction of a compound having an epoxy group and acrylic acid. A variety of oligomers such as epoxy-based oligomers, modified epoxy-based oligomers and bisphenol-based oligomers can be used as epoxy acrylate oligomers.

Urethane acrylate oligomers are oligomers which contain one or more (meth)acryloyl groups (CH₂=CHCOO- or CH₂=C(CH₃)COO-) and contain a plurality of urethane bonds (-NHCOO-). Urethane (meth)acrylate oligomers can be produced by synthesizing a urethane prepolymer from a polyol and a polyisocyanate and adding an acrylate having a hydroxy group thereto.

Examples of polyester acrylate oligomers include dehydration condensation products from polyester polyols and acrylic acid. Examples of polyester polyols include reaction products from low molecular weight polyols such as ethylene glycol, polyethylene glycol, cyclohexanedimethanol, 3-methyl-1,5-pentanediol, propylene glycol, polypropylene glycol, 1,6-hexanediol and trimethylolpropane and polyols such as alkylene oxide adducts of these compounds, and acid components of dibasic acids such as adipic acid, succinic acid, phthalic acid, hexahydrophthalic acid and terephthalic acid or anhydrides thereof or the like.

Polyether acrylate oligomers include reaction products from polyether polyols such as polyethylene glycol and polypropylene glycol, and unsaturated carboxylic acids.

In addition, urethane modified acrylic oligomers (urethane acrylate oligomers) obtained by modifying polyols such as polybutadiene polyol, polyester polyol and polyether polyol with polyurethane and introducing acryl groups from a compound having a hydroxy group and an acryl group in the molecule and a compound having an isocyanate group and an acryl group are known, but not limited thereto. In addition, an acrylic oligomer preferably has 2 or more acryloyl groups in the molecule, and preferably 2 to 5 groups. An acrylic oligomer is preferably in the liquid state at 25°C in terms of workability, and specifically its viscosity is preferably 10000 mPa·s or more (25°C). In the present invention, the component (A) preferably contains as the skeleton in the molecule an acrylic oligomer having the polyether skeleton (polyether acrylate) and/or an acrylic oligomer having the polyester skeleton (polyester acrylate) because flexibility appears in a cured product. It is noted that the ester skeleton herein does not contain the ester group constituting an acrylate (an acrylic acid ester). That is, "having the ester skeleton" herein indicates a structure having an ester group except the ester group constituting an acrylate (an acrylic acid ester).

The component (A) can be used alone or two or more kinds can be used in combination.

The component (B) which can be used in the present invention is an acrylic monomer. The acrylic monomer is a monomer having one or more acryloyl groups in the molecule and indicates one with a viscosity at 25°C of less than 5000 mPa·s. The acrylic monomer preferably has a molecular weight of less than 1000, and more preferably a molecular weight of less than 400. The component (B) of the present invention contains the following components (b-1) to (b-3), and each is contained in an amount of 20 wt% or more in the component (B). The component (B) is preferably in the liquid state at 25°C. The lower limit of the viscosity is not particularly limited and is usually 1 mPa·s or more.

The component (b-1) which can be used in the present invention is an ether-based acrylic monomer and/or an ester-based acrylic monomer. The ether-based indicates to have an ether group in a molecule and the ester-based indicates to have an ester group in a molecule. Herein, the ester group in the ester-based acrylic monomer does not contain the ester group constituting an acrylate (an acrylic acid ester). That is, the ester group herein indicates an ester group except the ester group constituting an acrylate (an acrylic acid ester).

Specific examples of ether-based acrylic monomers include n-butoxyethyl acrylate, butoxydiethylene glycol acrylate, methoxytriethylene glycol acrylate, 2-ethylhexyl diglycol acrylate, trimethoxy polyethylene glycol acrylate, methoxy polyethylene glycol acrylate, tetrahydrofurfuryl acrylate, glycidyl acrylate, diethylene glycol diacrylate, polyethylene glycol diacrylate, triethylene glycol diacrylate, dipentaerythritolhexaacrylate, ethoxylated (9) trimethylolpropane triacrylate, propoxylated (3) trimethylolpropane triacrylate and the like, but not limited thereto. Specific examples of ester based acrylic monomers include 2-acryloyloxyethyl succinic acid and the like, but not limited thereto.

The component (b-2) which can be used in the present invention is a cyclic hydrocarbon-based acrylic monomer. The cyclic hydrocarbon-based indicates to have a cyclic saturated hydrocarbon in a molecule. The number of carbons in a cyclic saturated hydrocarbon is preferably 3 to 20. Specific examples thereof include isobornyl acrylate, dimethyloltricyclodecane dimethacrylate, 2-acryloyloxyethylhexahydrophthalic acid, dicyclopentenyl acrylate, dicyclopentenyloxyethyl acrylate, dicyclopentanyl acrylate, adamantyl acrylate, dimethyl tricyclo decane diacrylate and the like, but not limited thereto. In addition, even if an ether group or an ester group is contained in a molecule, that in which a cyclic hydrocarbon is contained is classified into the component (b-2).

The component (b-3) which can be used in the present invention is an aromatic acrylic monomer. The aromatic indicates to have a conjugated cyclic unsaturated hydrocarbon typified by the benzene skeleton, the naphthalene skeleton or the like in a molecule. The number of carbons in a conjugated cyclic unsaturated hydrocarbon is preferably 6 to 10. Specific examples thereof include benzyl acrylate, phenoxyethyl acrylate, phenoxypolyethylene glycol acrylate, nonylphenol ethylene oxide adduct acrylate, 2-acryloyloxyethyl phthalic acid, 2-acryloyloxyethyl-2-hydroxyethyl phthalic acid, neopentyl glycol acrylate benzoate and the like. Even if an ether group or an ester group is contained in a molecule, that in which an aromatic ring is contained is classified into the component (b-3) .

The component (B) can contain other acrylic monomers than (b-1) to (b-3). Other acrylic monomers include methacrylic acid, acrylic acid, methyl (meth)acrylate, n-butyl (meth)acrylate, i-butyl (meth)acrylate, t-butyl (meth)acrylate, 2-ethylhexyl (meth)acrylate, lauryl (meth)acrylate, tridecyl (meth)acrylate, stearyl (meth)acrylate, glycidyl (meth)acrylate, hydroxypropyl (meth)acrylate and the like.

As the amount of the component (B) to be added, the component (B) is added in an amount of 1000 to 2000 parts by mass per 100 parts by mass of the component (A). When the component (B) is less than 1000 parts by mass, bendability deteriorates. In addition, a cured product becomes hard and viscosity increases, and thus handleability can deteriorate. Meanwhile, when adding more than 2000 parts by mass, a cured product becomes brittle and toughness deteriorates. In addition, viscosity is too low, and thus the resin becomes unbalanced and is localized after application. In the present invention, the components (b-1) to (b-3) each are contained in an amount of 20 wt% or more in the component (B). The obvious reason is uncertain, but when the components (b-1) to (b-3) each are not contained in an amount of 20 wt% or more in the component (B), some characteristic of a cured product is not fully satisfied. The upper limit of the content of each component (b-1) to (b-3) in the component (B) is 60 wt% or less.

The component (C) which can be used in the present invention is a thiol compound. Specific examples thereof include β-mercaptopropionic acid, methyl-3-mercaptopropionate, 2-ethylhexyl-3-mercaptopropionate, n-octyl-3-mercaptopropionate, methoxybutyl-3-mercaptopropionate, stearyl-3-mercaptopropionate, trimethylolpropane tris(3-mercaptopropionate), tris-[(3-mercaptopropionyloxy)-ethyl]-isocyanurate, pentaerythritol tetrakis(3-mercaptopropionate), tetraethylene glycol bis(3-mercaptopropionate), dipentaerythritol hexakis(3-mercaptopropionate), thioglycolic acid, thioglycolic acid ammonium, thioglycolic acid monoethanolamine and the like, but not limited thereto. Particularly preferred is a compound having two or more thiol groups (-SH) in the molecule because there is the possibility of reaction with a plurality of functional groups. The compounds having two or more thiol groups in their molecules include trimethylolpropane tris(3-mercaptopropionate), tris-[(3-mercaptopropionyloxy)-ethyl]-isocyanurate, pentaerythritol tetrakis(3-mercaptopropionate), tetraethylene glycol bis(3-mercaptopropionate), dipentaerythritol hexakis(3-mercaptopropionate), and the like.

As the amount of the component (C) to be added, it is preferred that the component (C) is added in an amount of 30 to 250 parts by mass per 100 parts by mass of the component (A). When the amount is less than 30 parts by mass, photo-curing properties deteriorate, and thus tucks appear on the surface of a cured product, while when the amount is more than 250 parts by mass, a cured product becomes brittle and thus toughness does not appear. The amount of the component (C) to be added is more preferably 50 to 150 parts by mass per 100 parts by mass of the component (A).

The component (D) which can be used in the present invention is a photoinitiator. As the photoinitiator, radical photoinitiators which generate radical species by energy rays such as visible light rays, ultraviolet rays, X rays and electron beams, and cationic photoinitiators which generate cationic species such as Broensted acid and Lewis acid are known.

Specific examples of the above radical photoinitiators include acetophenones such as diethoxy acetophenone, 2-hydroxy-2-methyl-1-phenylpropane-1-one, benzyl dimethylketal, 4-(2-hydroxyethoxy)phenyl-(2-hydroxy-2-propyl)ketone, 1-hydroxycyclohexyl phenyl ketone, 2-methyl-2-morpholino(4-thiomethylphenyl)propane-1-one, 2-benzyl-2-dimethylamino-1-(4-morpholinophenyl)butanone and 2-hydroxy-2-methyl-1-[4-(1-methylvinyl)phenyl]propane oligomer; benzoins such as benzoin, benzoin methyl ether, benzoin ethyl ether, benzoin isopropyl ether and benzoin isobutyl ether; benzophenones such as benzophenone, methyl o-benzoylbenzoate, 4-phenyl benzophenone, 4-benzoyl-4'-methyl-diphenylsulfide, 3,3',4,4'-tetra(t-butylperoxycarbonyl)benzophenone, 2,4,6-trimethylbenzophenone, 4-benzoyl-N,N-dimethyl-N-[2-(1-oxo-2-propenyloxy)ethyl]b enzene methanaminium bromide and (4-benzoylbenzyl) trimethyl ammonium chloride; thioxanthones such as 2-isopropylthioxanthone, 4-isopropylthioxanthone, 2,4-diethylthioxanthone, 2,4-dichlorothioxanthone, 1-chloro-4-propoxythioxanthone, 2-(3-dimethylamino-2-hydroxy)-3,4-dimethyl-9H-thioxantho n-9-one mesochloride; and the like, but not limited thereto.

Specific examples of the above cationic photo initiators can include diazonium salts, sulfonium salts, iodonium salts and the like, and specifically include benzenediazonium hexafluoroantimonate, benzenediazoniumhexafluorophosphate, benzenediazonium hexafluoroborate, triphenylsulfonium hexafluoroantimonate, triphenylsulfonium hexafluorophosphate, triphenylsulfonium hexafluoroborate, 4,4'-bis[bis(2-hydroxyethoxyphenyl)sulfonio]phenylsulfid e bishexafluorophosphate, diphenyliodonium hexafluoroantimonate, diphenyliodoniumhexafluorophosphate, diphenyl-4-thiophenoxyphenylsulfonium hexafluorophosphate and the like, but not limited thereto.

The amount of the component (D) to be added is preferably 10 to 100 parts by mass per 100 parts by mass of the component (A). When the amount of the component (D) to be added is less than 10 parts by mass, photo-curing properties deteriorate, and when the amount is more than 100 parts by mass, the storage stability at 25°C of an acrylic resin composition in the liquid state deteriorates and thickening occurs during storage. The amount of the component (D) to be added is more preferably 30 to 70 parts by mass per 100 parts by mass of the component (A).

Polymerization inhibitors can be used for maintaining storage stability. When a large amount of polymerization inhibitor is added, however, storage stability becomes good, while reactivity becomes slow. Therefore, the amount to be added is preferably 0.001 to 0.1 wt% in the total amount of a composition. Specific examples thereof include quinone-basedpolymerization inhibitors such as hydroquinone, methoxyhydroquinone, benzoquinone and p-tert-butylcatechol; alkylphenol-based polymerization inhibitors such as 2,6-di-tert-butylphenol, 2,4-di-tert-butylphenol, 2-tert-butyl-4,6-dimethylphenol, 2,6-di-tert-butyl-4-methylphenol and 2,4,6-tri-tert-butylphenol; amine-based polymerization inhibitors such as alkylated diphenylamine, N,N'-diphenyl-p-phenylenediamine, phenothiazine, 4-hydroxy-2,2,6,6-tetramethyl piperidine, 4-benzoyloxy-2,2,6,6-tetramethyl piperidine, 1,4-dihydroxy-2,2,6,6-tetramethyl piperidine and 1-hydroxy-4-benzoyloxy-2,2,6,6-tetramethyl piperidine; N-oxyl-based polymerization inhibitors such as 2,2,6,6-tetramethylpiperidine-N-oxyl, 4-hydroxy-2,2,6,6-tetramethylpiperidine-N-oxyl and 4-benzoyloxy-2,2,6,6-tetramethylpiperidine-N-oxyl;andthe like, but not limited thereto.

To the acrylic resin composition of the present invention, additives such as coloring agents such as pigments and dyes, inorganic fillers such as metal powders, calcium carbonate, talc, silica, alumina and aluminum hydroxide, flame retardants, organic fillers, plasticizers, antioxidants, antifoaming agents, coupling agents, leveling agents and rheology control agents can be added in the proper amount without losing the characteristics of the present invention. By the addition of these additives, a composition with excellent resin strength, adhesive strength, workability, preservability and the like and a cured product thereof can be obtained. In addition, other monomers and oligomers such as methacrylic monomers and/or oligomers can be contained therein without losing the characteristics of the present invention.

The acrylic resin composition of the present invention shows excellent peel strength, surface curing properties, toughness and bendability after curing, even though its viscosity is low. Therefore, the viscosity at 25°C of the resin composition of the present invention is preferably 300 mPa·s or less, more preferably 100 to 300 mPa·s and further preferably 100 to 200 mPa·s.

The acrylic resin composition of the present invention is suitably used as an adhesive. The acrylic resin composition of the present invention has adequate peel strength (which is capable of adhesive fixation at a level at which peeling is not easy under normal conditions, and, when a cured product is peeled before actual fixation, the cured product is easily peeled by adequate physical force or heating or the like), and a cured product after photo-curing has excellent toughness and bendability, and thus the acrylic resin composition of the present invention is more preferably used as a temporary fixing agent.

As temporary fixing agents in the present invention, temporary fixing compositions which are used when silicon wafers, sapphire glass, ceramic materials, optical glasses, crystal, magnetic materials and the like (hereinafter, referred to as wafers etc.) are subjected to a surface grinding process are known. In this case, the temporary fixation means to be capable of fixing wafers etc. against the shearing direction force at a level at which wafers etc. do not come off in the step of the grinding process. For the purpose of efficient peeling, a bonded adherend can be heated after temporary fixation, and by the heating, wafers etc. can be easily peeled from a temporary fixing agent.

The illuminance of an LED irradiation device using LED as a light source is generally 30 to 900 mW/cm², and 20 to 300 mW/cm² depending on circumstances. As compared to an irradiation device using a high pressure mercury vapor lamp, in the LED irradiation device, there is a tendency that photo-curing properties of a curable resin deteriorate due to low illuminance. However, even in the case of low illuminance or low integrated intensity of light, the composition of the present invention has photo-curing properties sufficiently responds to an LED irradiation device. Therefore, the acrylic resin composition of the present invention is suitably the acrylic resin composition for an LED irradiation device, which is cured by using an LED irradiation device.

Another embodiment of the present invention is a method for temporarily fixing a plurality of adherends using the above acrylic resin composition, wherein the acrylic resin composition is cured by using an LED irradiation device.

As the methods of temporary fixation, a method in which the resin composition is applied on an adherend surface of one adherend to be fixed in a proper amount, followed by superimposing another adherend thereon, a method comprising laminating a plurality of adherends to be temporarily fixed in advance and applying an adhesive thereto using, for example, an application method by permeation of the adhesive through interspaces, then curing the photo curable adhesive by irradiating visible radiation or ultraviolet rays to the adherends to temporarily-fix the adherends together, and the like are exemplified.

### EXAMPLES

The present invention will be now described in more detail by way of examples. It is noted, however, that the present invention is not limited to only the examples. (Hereinafter, an acrylic resin composition will be simply referred to as a composition.)

### [Examples 1 to 8 and Comparative Examples 1 to 12]

The following components were provided for preparing the compositions of Examples 1 to 8 and Comparative Examples 1 to 12.
Component (A): an acrylic oligomer
- Polyether urethane acrylate (SHIKOH UV-3700B manufactured by The Nippon Synthetic Chemical Industry Co. , Ltd. : viscosity at 60°C 30,000 to 60,000 mPa·s)
- Polyester acrylate (ARONIX M-8060 TOAGOSEI CO., LTD.:
viscosity at 25°C 5,000 to 12,000 mPa·s)
- Polyester urethane acrylate (SHIKOH UV-3000B manufactured by The Nippon Synthetic Chemical Industry Co. , Ltd. : viscosity at 60°C 45,000 to 65,000 mPa·s)
- Bisphenol A epoxy acrylate (Ebecryl 3700 manufactured by DAICEL-CYTEC Co., Ltd.: viscosity at 60°C 4,300 mPa·s and viscosity at 25°C 5000 mPa·s or more)
Component (B): an acrylic monomer
Component (b-1): a polyether-based acrylic monomer and/or a polyester-based acrylic monomer
- Ethoxylated (9) trimethylolpropane triacrylate (SR502 manufactured by Sartomer Company Inc. : viscosity at 25°C 130 mPa·s)
- PEG#400 diacrylate (LIGHT ACRYLATE 9EG-A manufactured by KYOEISHA CHEMICAL Co. , LTD. : viscosity at 25°C 22 to 25 mPa·s)
- Bifunctional polyester acrylate (ARONIX M-6200 TOAGOSEI CO., LTD.: viscosity at 25°C 700 to 3,700 mPa·s) Component (b-2) : a cyclic hydrocarbon-based acrylic monomer
- Dimethyl tricyclodecane diacrylate (LIGHT ACRYLATE DCP-A manufactured by KYOEISHA CHEMICAL Co., LTD.: viscosity at 25°C 150 mPa·s)
- Isobornyl acrylate (LIGHT ACRYLATE IB-XA manufactured by KYOEISHA CHEMICAL Co., LTD.: viscosity at 25°C 5 mPa·s) Component (b-3): an aromatic acrylic monomer
- Phenoxyethyl acrylate (Viscoat #192 manufactured by OSAKA ORGANIC CHEMICAL INDUDSTRY LTD. : viscosity at 25°C 3.3 mPa·s) Component (B'): an acrylic monomer except the component (B)
- Lauryl acrylate (LIGHT ACRYLATE L-A, KYOEISHA CHEMICAL Co., LTD.: viscosity at 25°C 4 mPa·s)
Component (C): a thiol compound
- Pentaerythritol tetrakis(3-mercaptopropionate) (PEMP-20P manufactured by SC Organic Chemical Co., Ltd.)
Component (D): a photoinitiator
- 1-Hydroxycyclohexyl phenyl ketone (SUNCURE 84, Chemark Chemical Co., Ltd)

### Other components

### Filler

### - Fumed silica modified with polydimethylsiloxane (CAB-O-SIL TS-720 manufactured by Cabot Specialty Chemicals, Inc.)

The component (A), the component (B) and the filler are stirred for 30 minutes. After that, the above mixture is dispersed by a triple roll mill. The component (C) and the component (D), which are remaining components, are added thereto, and the obtained mixture is mixed and stirred while maintaining temperature at 50°C by a stirring device equipped with a thermostat to obtain the compositions of Examples and Comparative Examples. The specific amounts used for preparation are according to Table 1, and all values are shown by parts by mass. In addition, "the total of the component (B) and the component (B')", and the components (b-1) to (b-3) and the component (B') contained in the component (B) and the component (B') each are shown by "proportion (mass%) " in Table 2.

**[Table 1-1]**

| Components | | Materials | Example 1 | Example 2 | Example 3 | Example 4 | Example 5 | Example 6 | Example 7 | Example 8 |
|---|---|---|---|---|---|---|---|---|---|---|
| Component (A) | | UV-3700B | 100 | | | | | | | |
| | | M-8060 | | 100 | 100 | 100 | 100 | 100 | | |
| | | UV-3000B | | | | | | | 100 | |
| | | 3700 | | | | | | | | 100 |
| Component (B) | Component (b-1) | SR502 | 260 | 400 | 260 | 130 | 60 | 30 | 260 | 260 |
| | | 9EG-A | 160 | 160 | 160 | 160 | 160 | 160 | 160 | 160 |
| | | M-6200 | 300 | 300 | 300 | 300 | 300 | 300 | 300 | 300 |
| | Component (b-2) | DCP-A | 440 | 440 | 440 | 440 | 320 | 320 | 440 | 440 |
| | | IB-XA | 40 | 40 | 40 | 40 | 40 | 40 | 40 | 40 |
| | Component (b-3) | #192 | 440 | 440 | 440 | 440 | 440 | 440 | 440 | 440 |
| Component (B') | | L-A | | | | | | | | |
| Component (C) | | PEMP-20P | 130 | 130 | 130 | 130 | 120 | 60 | 130 | 130 |
| Component (D) | | 84 | 60 | 60 | 60 | 60 | 56 | 56 | 60 | 60 |
| Filler | | TS-720 | 30 | 30 | 30.0 | 30 | 30 | 30 | 30 | 30 |
| Total | | | 1960 | 2100 | 1960 | 1830 | 1626 | 1536 | 1960 | 1960 |

**[Table 1-2]**

| Components | | Materials | Comparative Example 1 | Comparative Example 2 | Comparative Example 3 | Comparative Example 4 | Comparative Example 5 | Comparative Example 6 | Comparative Example 7 | Comparative Example 8 |
|---|---|---|---|---|---|---|---|---|---|---|
| Component (A) | | UV-3700B | | 100 | 100 | | | 100 | 100 | 100 |
| | | M-8060 | 100 | | | 100 | 100 | | | |
| | | UV-3000B | | | | | | | | |
| | | 3700 | | | | | | | | |
| Component (B) | Component (b-1) | SR502 | 260 | 30 | | | | | | |
| | | 9EG-A | 160 | | | 550 | 750 | | | |
| | | M-6200 | 300 | | | 400 | 400 | | | |
| | Component (b-2) | DCP-A | 440 | 400 | | | | 200 | 200 | |
| | | IB-XA | 40 | 520 | 700 | 50 | 50 | 300 | 325 | 350 |
| | Component (b-3) | #192 | 440 | | 200 | 400 | 200 | 150 | 150 | 50 |
| Component (B') | | L-A | | 220 | 200 | | | 200 | 275 | 100 |
| Component (C) | | PEMP-20P | | 120 | | | 8 | 5 | 10 | |
| Component (D) | | 84 | 60 | 60 | 42 | 50 | 50 | 38 | 38 | 25 |
| Filler | | TS-720 | 30 | 30 | | 30 | 30 | 20 | 20 | |
| Total | | | 1830 | 1480 | 1242 | 1580 | 1588 | 1013 | 1118 | 625 |

**[Table 1-3]**

| Components | | Materials | Comparative Example 9 | Comparative Example 10 | Comparative Example 11 | Comparative Example 12 |
|---|---|---|---|---|---|---|
| Component (A) | | UV-3700B | 100 | | | |
| | | M-8060 | | | | |
| | | UV-3000B | | | | |
| | | 3700 | | | | |
| Component (B) | Component (b-1) | SR502 | | | | |
| | | 9EG-A | | 170 | 170 | |
| | | M-6200 | | 70 | 70 | |
| | Component (b-2) | DCP-A | | | | 100 |
| | | IB-XA | 240 | 70 | 70 | 30 |
| | Component (b-3) | #192 | 40 | 670 | 120 | 300 |
| Component (B') | | L-A | 70 | | | |
| Component (C) | | PEMP-20P | | | | 2 |
| Component (D) | | 84 | 17 | 40 | 21 | 10 |
| Filler | | TS-720 | | | | |
| Total | | | 467 | 1020 | 451 | 442 |

**[Table 2-1]**

| Items | | Example 1 | Example 2 | Example 3 | Example 4 | Example 5 | Example 6 | Example 7 | Example 8 |
|---|---|---|---|---|---|---|---|---|---|
| Total of component (B) and component (B') | | 1640 | 1780 | 1640 | 1510 | 1320 | 1290 | 1640 | 1640 |
| Proportion (%) | Component (b-1) | 44 | 48 | 44 | 39 | 39 | 38 | 44 | 44 |
| | Component (b-2) | 29 | 27 | 29 | 32 | 27 | 28 | 29 | 29 |
| | Component (b-3) | 27 | 25 | 27 | 29 | 33 | 34 | 27 | 27 |
| | Component (B') | 0 | 0 | 0 | 0 | 0 | 0 | 0 | 0 |
| | Total | 100 | 100 | 100 | 100 | 100 | 100 | 100 | 100 |

**[Table 2-2]**

| Items | | Comparative Example 1 | Comparative Example 2 | Comparative Example 3 | Comparative Example 4 | Comparative Example 5 | Comparative Example 6 | Comparative Example 7 | Comparative Example 8 |
|---|---|---|---|---|---|---|---|---|---|
| Total of component (B) and component (B') | | 1640 | 1170 | 1100 | 1400 | 1400 | 850 | 950 | 500 |
| Proportion (%) | Component (b-1) | 44 | 3 | 0 | 68 | 82 | 0 | 0 | 0 |
| | Component (b-2) | 29 | 79 | 64 | 4 | 4 | 59 | 55 | 70 |
| | Component (b-3) | 27 | 0 | 18 | 29 | 14 | 18 | 16 | 10 |
| | Component (B') | 0 | 19 | 18 | 0 | 0 | 24 | 29 | 20 |
| | Total | 100 | 100 | 100 | 100 | 100 | 100 | 100 | 100 |

**[Table 2-3]**

| Items | | Comparative Example 9 | Comparative Example 10 | Comparative Example 11 | Comparative Example 12 |
|---|---|---|---|---|---|
| Total of component (B) and component (B') | | 350 | 980 | 430 | 430 |
| Proportion | Component (b-1) | 0 | 24 | 56 | 0 |
| | Component (b-2) | 69 | 7 | 16 | 30 |
| | Component (b-3) | 11 | 68 | 28 | 70 |
| | Component (B') | 20 | 0 | 0 | 0 |
| | Total | 100 | 100 | 100 | 100 |

The compositions were measured and observed by the following viscosity measurement, observation of surface curing properties, Shore hardness measurement, peel strength measurement, observation of bendability and observation of toughness during pulling. The measured results were summarized in Table 3.

### [Viscosity measurement]

A sample is left at 25°C for 3 minutes and the "viscosity (mPa·s)" is then measured under measurement conditions of 25°C and 100 rpm using an E-type viscometer (HBDV-II-PRO-CP manufactured by BROOKFIELD ENGINEERING, Cone: CPE-42 (angle: 1.565°, radius: 2.4 CM, resin volume: 1 ML) rotational frequency: 100 RPM). The viscosity of a resin composition is preferably 100 to 300 mPa·s and further preferably 100 to 200 mPa·s. When the viscosity is lower than 100 mPa·s, a composition is partially unbalanced, and when the viscosity is higher than 300 mPa·s, there is an adverse effect on workability during application.

### [Observation of surface curing properties]

Upon a glass plate, 500 mg of composition is applied and irradiation is carried out at an irradiation wavelength of 365 nm, an illuminance of 40 mW/cm² and an integrated light intensity of 500 mJ/cm² by a spot irradiation device using LED as a light source. (In the following tests, the irradiation device and irradiation conditions are the same.) When the surface of a cured product is fingered after curing, a case in which a resin does not adhere to the finger is decided as "○", and a case in which a resin adheres to the finger is decided as "×", and "surface curing properties" are decided. When the surface curing properties are ×, an adherend is contaminated by an uncured portion of a composition, which is not preferred.

### [Hardness measurement]

A cured product of a composition which is formed into a flat round shape with a thickness of 3 mm is created as a measurement surface. A Shore D-type hardness meter is used as a hardness meter. The cured product is placed on a measurement table, and with the pressure reference level of a durometer maintained in the horizontal position to the surface of a sample, pressure is rapidly applied at a force of 5 kgf on a measurement surface without shocks and the pressure reference level and the sample are brought into intimate contact. When the operation is concluded, the maximum indicated value of an indicator is read as "hardness (no unit)" within a second as a rule. The Shore hardness is preferably harder than 40 and softer than 90. When the hardness is softer than 40, toughness during pulling deteriorates, and thus a cured product ends up being cut when peeled. Meanwhile, when the hardness is harder than 90, a cured product tends to become brittle and bendability deteriorates, and thus the cured product is easily cut.

### [Peel adhesive strength measurement]

A glass plate with 100 mm in length, 25 mm in width and 10 mm in thickness and a PET film in the strip state with the same width as above are laminated with a composition, and laminated by photo-irradiation using a spot irradiation device. In this case, the film thickness of the composition is adjusted to 50 µm. After that, an edge of the PET film is fixed for pulling in a direction perpendicular (90°) to the surface of the length and width of the fixed glass plate, and the PET film is pulled at a tensile speed of 50 mm/min. The "peel adhesive strength (N/m)" is calculated from the maximum value at this time. The peel adhesive strength is preferably 0.3 to 2.5 N/m. When the strength is lower than 0.3 N/m, adhesive strength is too low and thus temporary fixation cannot be carried out, and when the strength is higher than 2.5 N/m, the strength appears too much and peeling is difficult.

### [Observation of bendability]

A composition is uniformly applied on a sheet-shaped PET at a film thickness of 100 µm, and another sheet-shaped PET is laminated to the composition-applied surface. After that, photo-irradiation is carried out by a spot irradiation device to create a cured product in the sheet state. After one PET was peeled, the remaining cured product and PET were bended in the 360° direction and "bendability" was observed. A case in which a cured product is not torn along the crease is decided as "○", and a case in which a cured product is totally torn in half is decided as "×". A case in which a cured product in the sheet state is torn during production is also decided as "×".

### [Observation of toughness during pulling]

A composition is uniformly applied on a sheet-shaped PET at a film thickness of 100 µm, and another sheet-shaped PET is laminated to the composition-applied surface. After that, photo-irradiation is carried out by a spot irradiation device to create a cured product in the sheet state. After one PET was peeled, an edge of the cured product in the sheet state was pulled. The cured product was continuously pulled at a velocity of 50 mm/min and "toughness during pulling" was observed. A case in which a cured product is not cut and is peeled on the interface of PET is decided as "○", and a case in which a cured product is cut is decided as "×". The observation is carried out at an atmosphere of 25°C.

**[Table 3-1]**

| Test items | Example 1 | Example 2 | Example 3 | Example 4 | Example 5 | Example 6 | Example 7 | Example 8 |
|---|---|---|---|---|---|---|---|---|
| Viscosity | 200 | 136 | 130 | 139 | 121 | 123 | 196 | 144 |
| Surface curing properties | ○ | ○ | ○ | ○ | ○ | ○ | ○ | ○ |
| Hardness | 50 | 89 | 76 | 75 | 73 | 75 | 51 | 64 |
| Peel adhesive strength | 0.4 | 1.2 | 1.6 | 1.6 | 2.0 | 1.4 | 0.4 | 0.5 |
| Bendability | ○ | ○ | ○ | ○ | ○ | ○ | ○ | ○ |
| Toughness during pulling | ○ | ○ | ○ | ○ | ○ | ○ | ○ | ○ |

**[Table 3-2]**

| Test items | Comparative Example 1 | Comparative Example 2 | Comparative Example 3 | Comparative Example 4 | Comparative Example 5 | Comparative Example 6 | Comparative Example 7 | Comparative Example 8 |
|---|---|---|---|---|---|---|---|---|
| Viscosity | 118 | 117 | 50 | 92 | 125 | 137 | 100 | 137 |
| Surface curing properties | × | × | × | × | × | × | × | × |
| Hardness | 80 | 70 | 68 | 68 | 65 | 82 | 63 | 65 |
| Peel adhesive strength | 0.4 | 2.0 | 1.5 | 1.2 | 0.3 | 0.2 | 0.2 | 5.0 |
| Bendability | × | × | ○ | × | × | × | × | ○ |
| Toughness during pulling | × | × | × | × | × | × | × | × |

**[Table 3-3]**

| Test items | Comparative Example 9 | Comparative Example 10 | Comparative Example 11 | Comparative Example 12 |
|---|---|---|---|---|
| Viscosity | 294 | 33 | 75 | 71 |
| Surface curing properties | × | × | × | × |
| Hardness | 65 | 70 | 75 | 80 |
| Peel adhesive strength | 5.0 | 1.4 | 0.8 | 0.8 |
| Bendability | ○ | × | × | × |
| Toughness during pulling | × | × | × | × |

Compared with Examples 1 to 8, Comparative Examples 1 to 5 contain the component (B) in an amount of more than 1000 parts by mass per 100 parts by mass of the component (A), but all of surface curing properties, bendability and toughness during pulling are not satisfied. In Comparative Example 1, a thiol compound, which is the component (C), is not contained, and thus surface curing properties, bendability and toughness, which are characteristics required as a temporary fixing agent, are insufficient as compared to those of Examples 1 to 8. In addition, when the amount of any of the components (b-1) to (b-3) is below 20 wt% of the whole component (B) and when the component (B) except the components (b-1) to (b-3) is used instead, sufficient characteristics are not obtained. In Comparative Examples 6 to 9, the component (B) is added in an amount of below 1000 parts by mass per 100 parts by mass of the component (A), and thus sufficient characteristics are not obtained in these cases. Further, in combinations which do not contain the component (A) at all as Comparative Examples 10 to 12, viscosity is too low, and sufficient characteristics are not obtained. The obvious reason is uncertain, but characteristics required as a temporary fixing agent are satisfied by completing conditions as Examples 1 to 8.

### INDUSTRIAL APPLICABILITY

The present invention is an acrylic resin composition, which has good workability due to low viscosity, has adequate peel strength, and is easily peeled from an adherend because a cured product has toughness, and thus can be used for various adherends as a temporary fixing agent. The adherends include silicon wafers, sapphire glass, ceramic materials, optical glasses, crystal, magnetic materials and the like, and the present invention is useful as a temporary fixing agent used for a surface grinding process.

In the present description, "mass" and "weight", "mass%" and "wt%" and "parts by mass" and "parts by weight" have the same meanings.

The present application is based on Japanese Patent Application No. 2011-251853 filed on November 17, 2011, and the disclosed contents are incorporated by reference herein in its entirety.

## Claims

1. An acrylic resin composition, which contains components (A) to (D) as essential components, and contains 1000 to 2000 parts by mass of the component (B), 30 to 250 parts by mass of the component (C), and 10 to 100 parts by mass of the component (D), per 100 parts by mass of the component (A):
Component (A): an acrylic oligomer,
Component (B): an acrylic monomer, which contains components (b-1) to (b-3), wherein the components (b-1) to (b-3) each are contained in an amount of at least 20 mass% in the component (B),
Component (b-1) : an ether-based acrylic monomer and/or an ester-based acrylic monomer,
Component (b-2): a cyclic hydrocarbon-based acrylic monomer,
Component (b-3): an aromatic acrylic monomer,
Component (C): a thiol compound, and
Component (D): a photoinitiator.

2. The acrylic resin composition according to claim 1, wherein the component (A) is an acrylic oligomer having an ether skeleton and/or an ester skeleton.

3. The acrylic resin composition according to claim 1 or 2 for the use in an LED irradiation device.

4. A temporary fixing agent comprising the acrylic resin composition set forth in any one of claims 1 to 3.
